# EUROPÄISCHE PATENTSCHRIFT

(11) **EP 0 529 315 B1**
(45) Veröffentlichungstag und Bekanntmachung des Hinweises auf die Patenterteilung: **24.01.1996**
(21) Anmeldenummer: 92112662.9
(22) Anmeldetag: 24.07.1992
(51) Int. Cl.: B01D 50/00, B01D 46/30, B01D 47/06, B01D 47/04

(54) **Verfahren zum Abreinigen von mit löslichen Partikeln beladenen Schüttschichtfiltern**
Process for cleaning particle-filters loaded with soluble particules
Procédé pour nettoyer des filtres particules chargés de particules solubles

(30) Priorität: 22.08.1991 DE 4127746
(43) Veröffentlichungstag der Anmeldung: 03.03.1993
(73) Patentinhaber: Forschungszentrum Karlsruhe GmbH, D-76133 Karlsruhe (DE)
(72) Erfinder: Lindner, Wolfgang, W-7513 Stutensee-Staffort (DE)
(74) Vertreter: Gottlob, Peter, Dipl. Ing.

(56) Entgegenhaltungen:
- DE-A- 2 931 424
- DE-A- 3 201 553
- DE-A- 3 403 980
- DE-B- 1 243 523
- US-A- 3 815 335
- US-A- 4 290 783

## Beschreibung

Die vorliegende Erfindung betrifft ein Verfahren gemäss dem Oberbegriff des Hauptanspruches sowie eine für das Verfahren geeignete Vorrichtung.

Wie bei allen filternden Abscheidern ist auch bei Schüttschichtfiltern eine vollständige Abreinigung d.h. Trennung des abgeschiedenen Stoffes vom Schüttgut für den kontinuierlichen Betrieb nötig.

Die Abreinigung von Schüttschichtfiltern erfolgt im allgemeinen mechanisch. Die abgeschiedenen Substanzen werden dabei gemeinsam mit dem Schüttgut aus dem Filter entfernt und z.B. über eine Siebmaschine geleitet. Das so gereinigte Schüttgut wird in das Filter zurückgefördert und steht wieder für die Filtration zur Verfügung.

Die mechanische Abreinigung erfordert jedoch einen hohen apparativen und verfahrenstechnischen Aufwand für die Schüttgutbewegung und den Austrag. Durch den Prozess ist meist keine vollständige Abreinigung erreichbar, durch den Abrieb des Schüttgutes wird die abgeschiedene Substanz verunreinigt.Ausserdem verändert der Abrieb die Eigenschaften des Schüttgutes. Bei Prozessen mit hohen Wassergehalten im Abgas, bei Taupunktunterschreitung oder bei der Abscheidung hygroskopischer Substanzen sind die Schüttgutbewegung und die mechanische Abreinigung stark eingeschränkt.

Aus der DE-A-3201553 ist bekannt, die beladenen Sandpartikel eines Tiefbettfilters mit Wasser zu waschen und die Filterschüttung zur Verbesserung des Wärmeaustausches und zur Kühlung des aufgeheizten Filtermateriales mit einer Flüssigkeit zu besprühen. Wie dies geschieht, bleibt offen.

In der US-A-4290783 ist ein Verfahren offenbart, bei welchem eine senkrecht stehende, dünne Filtermatte durch seitliches Ansprühen von Wasser abgereinigt werden soll. Die gelösten Substanzen strömen mit dem Wasser an der Filtermatte nach unten ab und werden weitergeleitet.

Letztlich ist in der US-A-3815335 ein weiteres Verfahren offenbart, bei dem die Abreinigung mehrerer dünner, senkrecht stehender querdurchströmter Aktivkohlebetten zwar durch Aufsprühen von oben, aber damit quer zur Dürchströmung erfolgt. Die Problematik der Abreinigung von flachliegenden Tiefbettfiltern ist dabei jedoch nicht gegeben.

Die vorliegende Erfindung hat nun zur Aufgabe ein Verfahren zur Abreinigung von Schüttschichtfiltern zu schaffen, welches die eingangs genannten Nachteile vermeidet. Das Verfahren soll bei von oben nach unten durchströmten Schüttschichtfiltern zur Anwendung kommen, die mit in Flüssigkeiten löslichen Partikeln beladen sind.

Zur Lösung dieser Aufgabe schlägt nun die vorliegende Erfindung ein Verfahren mit den Merkmalen vor, die im Kennzeichen des Patentanspruches 1 angegeben sind.Weitere vorteilhafte Ausgestaltungen des Verfahrens sind in den kennzeichnenden Merkmalen der Ansprüche 2 bis 3 zu sehen. Besonders geeignete Vorrichtungen zur Ausführung des erfindungsgemässen Verfahrens sind in den kennzeichnenden Merkmalen der Ansprüche 4 und 5 angegeben.

Mit der vorliegenden Erfindung kann nun in besonders vorteilhafter Weise der apparative und verfahrenstechnische Aufwand des Abreinigungsverfahrens erheblich reduziert werden. Der Schüttgutaustrag, der Siebvorgang und die Fördereinrichtungewn können entfallen. Am Schüttgut wird kein Abrieb mehr erzeugt, die abgeschiedene Substanz fällt in sehr reiner Form an. Hohe Wassergehalte im Abgas bzw Taupunktunterschreitungen sind kein Problem mehr, sie fördern sogar die Abreinigung. Die Anwesenheit von Wasser fördert Partikelbildungs- und Abscheideprozesse, wie z.B. die Bildung von Ammoniumsalzen aus SO₂, NH₃ und Wasser. Der SO₂-Abscheidegrad bekannter Rauchgasreinigungsverfahren kann dadurch erhöht werden, ein NH₃-Schlupf wird vermieden.

Weitere Einzelheiten der Erfindung werden im folgenden und anhand der Figuren 1, 2 und 3 näher erläutert. Es zeigen:
die Figur 1 schematisch ein erstes Gehäuse, in dem das neue Verfahren angewendet wird und
die Figur 2 eine weitere Anordnungsmöglichkeit der Schüttschichtfilter,
die Figur 3 den zeitlichen Differenzdruck über die Schichten.

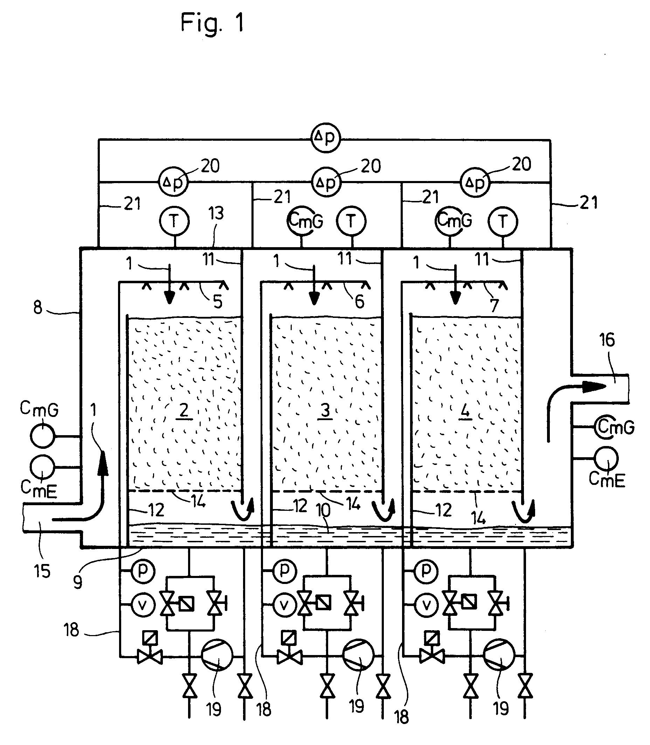

Der Grundgedanke des neuen Verfahrens besteht darin, dass das Schüttgut mit einer Waschflüssigkeit besprüht bzw berieselt wird. Die abgeschiedenen Substanzen werden dadurch gelöst und können in flüssiger Form aus der Schüttschicht entfernt werden.
Das Verfahren wird anhand der schematischen Figur 1 erläutert.Der zu reinigende Gasstrom 1 durchströmt das Schüttgut bzw die drei Schüttschichtfilter 2,3 und 4 senkrecht von oben nach unten. Dabei ist das Schüttgut in die drei hintereinander durchströmten Schichten 2 bis 4 unterteilt. Jede Schicht der Filter ist mit einer separaten Vorrichtung zum Aufsprühen der Waschflüssigkeit versehen, bei der dargestellten Ausführung sind dies die Düsenreihen 5,6 und 7, deren Sprühöffnungen über den Schichten 2 bis 4 gelegen sind und denen die Waschflüssigkeit hier von unten her zugeführt wird. Unter den Schichten 2 bis 4 tropft die beladene Waschflüssigkeit ab und wird weggeführt.

Für die Abreinigung der Schüttschichten 2 bis 4 gibt es zwei Verfahrensvarianten:
1. Alle Einzelschichten werden kontinuierlich, aber mit unterschiedlichen Flüssigkeitsströmen berieselt. Die für alle filternden Abscheider typische Bildung eines Filterkuchens findet nicht mehr statt, die abgeschiedenen festen Partikel werden sofort gelöst. Die Flüssigkeitströme der Einzelschichten werden dabei so gesteuert, dass die abgeschiedene Trockensubstanz gerade gelöst wird, dabei nimmt der Flüssigkeitdurchsatz in Strömungsrichtung des Gases d.h. von Schicht zu Schicht immer mehr ab, da die Beladung der hintereinandergeschalteten Schichten immer geringer wird.
2. Die Zugabe der Waschflüssigkeit zu den Einzelschichten erfolgt diskontinuierliuch. Die Berieselung wird immer nur dann durchgeführt, wenn sich ein bestimmter Filterkuchen aufgebaut hat. Die Flüssigkeitszugabe wird nach Massgabe der Differenzdruckwerte jeder Schicht gesteuert. Bei einem vorgegebenen Maximalwert wird die Berieselung eingeschaltet und nach einer bestimmten Zeit bzw nach Erreichen eines bestimmten Differenzdruckminimums wird die Flüssigkeitszugabe unterbrochen. Bei dieser Verfahrensweise stellt sich der für die jeweilige Schicht benötigte minimale Flüssigkeitsdurchsatz automatisch ein.

Die Waschflüssigkeit wird bei beiden Verfahrensvarianten im geschlossenen Kreislauf gefahren solange bis hochkonzentrierte Lösungen vorliegen. Abfallflüssigkeiten geringerer Konzentration enstehen nicht.

Eine dreistufige Schüttschichtfilteranordnung gemäss der Figur 1 wurde erprobt. Die Anordnung weist ein äusseres Gehäuse 8 auf, dessen Boden 9 als Auffangwanne für die aus den Schüttschichtfilterschichten 2 bis 4 austretende Waschflüssigkeit 10 ausgebildet ist.

Das Gehäuse 8 weist mehrere innere Seitenwände 11 und 12 auf deren Länge bzw Höhe geringer ist, als die Höhe des Gehäuses 8 selbst. Die oberen Seitenwände 11, in der Figur 1 links von den Schüttschichtfilterschichten 2 bis 4, sind an der Oberwandung 13 des Gehäuses 8 angesetzt, die unteren 12 jedoch auf dem Boden 9. Da nun zwischen den unteren Seitenwänden 12 und der Oberwandung 13 bzw zwischen den oberen Seitenwänden 11 und dem Boden 9 freie Zwischenräume vorhanden sind kann die Gasströmung durch das Gehäuse geführt werden. Zwischen jeweils zwei Seitenwände 11 und 12 sind siebartige Böden 14 eingesetzt, auf welchen die Filterschichten 2 bis 4 aufgebracht sind. An der linken Seite des Gehäuses 8 ist unten die Zuluftöffnung 15, an der rechten oben die Abluftöffnung 16 angebracht.

Oberhalb der unteren Seitenwände 12 sitzt über den Schichten 2 bis 4 jeweils eine Düsenreihe 5, 6, 7, mittels welcher die Waschflüsigkeit 10 auf die Schichten gesprüht wird. Die Düsen werden über die Leitungen 18 gespeist, die Waschflüssigkeit wird über die nicht näher beschriebene Pumpeinrichtung im Kreislauf geführt oder bei einem bestimmten Grad der Aufkonzentration abgegeben.

Der Druckabfall zur Bestimmung des Beladegrades jeder Schicht wird mittels der schematisch dargestellten Druckmesseinrichtungen 20 überwacht nach deren Massgabe die Pumpeinrichtungen 19 gesteuert werden. Die einzelnen Druckmesseinrichtungen 20 erfassen mittels der Leitungen 21 die Druckdifferenz über jeweils eine Schicht, da diese zwischen den Wänden 11 und den Seitenwänden des Gehäuses 8 angeschlossen sind und den Druck über jeder Schicht bzw nach der letzten erfassen.

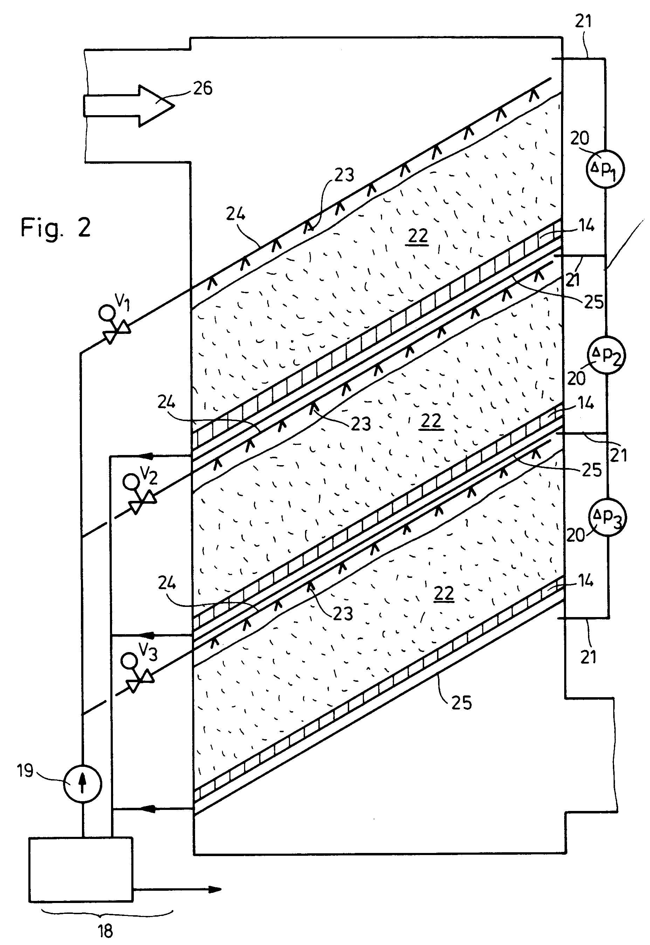

Die Figur 2 zeigt nun eine andere Ausführung des Gehäuses, in welchem die einzelnen Schichten 22 horizontal geneigt übereinander angeordnet sind und die Waschflüssigkeit 23 aus ebenfalls parallel dazu geführten Düsenreihen 24 aufgesprüht wird. Unter den Schichten 22 befinden sich Auffangrinnen 24 aus denen die beladene Waschflüssigkeit abläuft. Der Gasstrom wird von oben nach unten durch die Schichten geführt, die Drucküberwachung über die Schichten erfolgt wie bei der Fig.1 geschildert. Auch hier wird die Waschflüssigkeit wie dort beschrieben gehandhabt.

Bei einem Versuch in einer Filteranlage gem. der Figur 1 mit den folgenden Daten ergaben sich die anschliessend tabellarisch aufgelisteten Versuchsergebnisse.
- Filterfläche 0,36 m²
- Bettiefe maximal 3m (3x1m)
- Granulat Lava Körnung 2-5mm
- Testaerosol Ammoniumsulfat, Korngrösse 1 µm
- Luftdurchsatz max 700 m³/h, d.h. Anströmgeschw. 0,54 m/sec
- Wasserdurchsatz max 135 ltr/h (3x45) versprüht als Nebel, Verdüsungsdruck 10 bar
Die folgende Tabelle gibt eine Übersicht über die Ergebnisse für drei Schichten in einer Anordnung gem.der Fig.1:

| Bettiefe m | Gasgeschw. m/sec | Abreinigung Prinzip | Diff.-Druck gesamt mbar | QH₂O I_{H20}/m³ Gas | Abscheidegrad % |
|---|---|---|---|---|---|
| 2 (3x0,66) | 0,23 | p-gesteuert | 11-13 | 3x0,07 | 98-99 |
| 2 (3x0,66) | 0,23 | p-gesteuert | 13-15 | 1x0,07 | 96-98 |
| 2 (3x0,66) | 0,23 | immer berieselt (3 Schichten) | 16 | 3x0,15 | 97-99 |
| 2 (3x0,66) | 0,23 | immer berieselt (1. Schicht) | 14 | 3x0,15 | 96-97 |
| 1 (1x1) | 0,5 | immer berieselt | 18 | 1x0,15 | 90 |

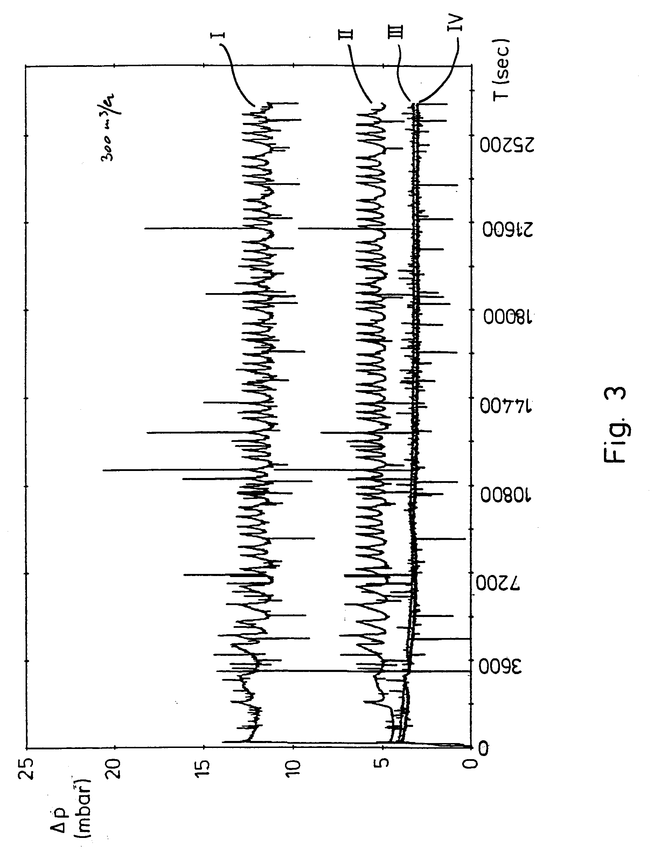

Die Fig. 3 zeigt, daß der Filterdifferenzdruck mit der beschriebenen Abreinigung konstant gehalten werden kann, d. h. ein kontinuierlicher Betrieb möglich ist. Die Kurven I - IV zeigen den Verlauf der Differenzdrücke gesamt und einzeln über die einzelnen Schichten 2 - 4.

### Bezugszeichenliste:

- 1: Gasstrom
- 2: Schüttschichtfilterschichten
- 3: Schüttschichtfilterschichten
- 4: Schüttschichtfilterschichten
- 5: Düsenreihen
- 6: Düsenreihen
- 7: Düsenreihen
- 8: Gehäuse
- 9: Boden
- 10: Waschflüssigkeit
- 11: Seitenwand oben
- 12: Seitenwand unten
- 13: Oberwandung
- 14: Siebböden
- 15: Zuluftöffnung
- 16: Abluftöffnung
- 18: Leitungen
- 19: Pumpeinrichtung
- 20: Druckmesseinrichtungen
- 21: Leitungen
- 22: Schüttschichten
- 23: Waschflüssigkeit
- 24: Düsenreihen
- 25: Auffangrinnen
- 26: Gasstrom
- I: Differenzdruck gesamt
- II: Differenzdruck Schicht 2
- III: Differenzdruck Schicht 3
- IV: Differenzdruck Schicht 4

## Patentansprüche

1. Verfahren zum Abreinigen von mit löslichen Partikeln beladenen Schüttschichtfiltern aus einer oder mehreren Schichten schüttbaren Filtermateriales auf siebartigen Böden, welche von oben nach unten von dem Abgasstrom durchsetzt werden, dadurch gekennzeichnet,
daß in Richtung des Abgasstromes (1,26) von oben nach unten eine Waschflüssigkeit (10,23) auf die Schüttung der Filterschicht (1,2,3 und 22) über den Böden (14) aufgesprüht, lösliche Partikel in der Schüttung mittels der Flüssigkeit (10,23) aufgelöst und diese unter der Schüttung wieder abgezogen wird und daß die Flüssigkeitszufuhr über den Differenzdruck in der Schüttung gesteuert wird, wobei bei einem vorgegebenen Maximalwert die Flüssigkeitszugabe eingeschaltet und bei einem Differenzdruckminimum wieder unterbrochen wird.

2. Verfahren nach Anspruch 1, dadurch gekennzeichnet, daß die Flüssigkeitszufuhr so ohne Überschuß gesteuert wird, daß die in der Schüttung abgeschiedene Trockensubstanz gerade gelöst wird.

3. Verfahren nach Anspruch 1 oder 2, dadurch gekennzeichnet, daß die Flüssigkeitszufuhr bei mehreren übereinander bzw. hintereinander gelegenen und nacheinander durchströmten Schichten auf jede Schicht getrennt aufgebracht und unter ihr wieder abgezogen wird, wobei der Flüssigkeitsdurchsatz in Strömungsrichtung bzw. von Schicht zu Schicht abnimmt.

4. Vorrichtung zur Durchführung des Verfahrens nach einem der Ansprüche 1 bis 3 mit einer oder mehreren - bezogen auf ihre Durchströmungsrichtung - hintereinandergeschalteten Schichten des Schüttgutes in einem Gehäuse, gekennzeichnet durch die folgenden Merkmale:
a) das Gehäuse (8) ist der Zahl der Schichten (1,2,3) entsprechend in räumlich nebeneinander angeordnete Kammern aufgeteilt,
b) jede Kammer besitzt zwei Seitenwände (11,12) geringerer Höhe als die Gehäusehöhe, wobei in Strömungsrichtung (1) gesehen, zur Hintereinanderschaltung der Kammern jeweils die erste Wand (12) auf dem Boden (9), die zweite (11) jedoch auf der Oberwandung (13) des Gehäuses (8) sitzt,
c) zwischen jeweils zwei Seitenwänden (11,12) einer Kammer sind siebartige Böden (14) vorhanden, auf denen das Schüttgut (2,3,4) liegt,
d) zwischen den Seitenwänden (11,12) zweier benachbarter Kammern ist ein Abstand für den Durchtritt des Abgasstromes (1) vorhanden,
e) oberhalb des Schüttgutes jeder Schicht (2,3,4) ist eine Reihe Sprühdüsen (5,6,7) für die Waschflüssigkeit (10) angebracht, die mittels Pumpen (19) über Leitungen (18) gespeist werden,
f) zwischen den oben befestigten Seitenwänden (11) und den Gehäuseaussenwänden sind Druckmeßeinrichtungen (20) über jede Schicht (2,3,4) vorhanden, nach deren Massgabe die Pumpen (19) gesteuert werden, wobei die Druckmesseinrichtungen (20) mittels der zwischen den Wänden (11) und den Seitenwänden des Gehäuses (8) angeschlossenen Leitungen (21) die Druckdifferenz über jeweils eine Schicht (2,3,4) erfassen,
g) der Boden (9) des Gehäuses (8) ist als Auffangwanne für die aus den Schichten (2,3,4) austretende Waschflüssigkeit (10) ausgebildet.

5. Vorrichtung nach Anspruch 4 zur Durchführung eines Verfahrens nach einem der Ansprüche 1 bis 3 mit einer oder mehreren hintereinanderliegenden Schichten des Schüttgutes, gekennzeichnet durch die weiteren Merkmale:
h) die einzelnen Schichten (22) sind in einem Gehäuse horizontal geneigt auf den siebartigen Böden (14) angeordnet,
i) in Abstand unter den Böden (22) befinden sich parallel dazu verlaufende Auffangrinnen (25),
j) oberhalb des Schüttgutes jeder Schicht (22) ist eine Reihe Sprühdüsen (24) für die Waschflüssigkeit (23) angebracht, die mittels einer Pumpe (19) gespeist werden,
k) es sind Druckmeßeinrichtungen (20) über jede Schicht (22) vorhanden, nach deren Massgabe die Pumpe (19) gesteuert wird, wobei die Druckmesseinrichtungen (20) mittels der zwischen den Schichten (22) angeschlossenen Leitungen (21) die Druckdifferenz über jeweils eine Schicht (22) erfassen.

## Claims

1. Method of cleaning bulk layer filters, which are charged with soluble particles and formed from one or more layers of pourable filtering material, on sieve-like bases, which are traversed from top to bottom by the waste gas stream, characterised in that a washing fluid (10,23) is sprayed in the direction of the waste gas stream (1,26) from top to bottom onto the filling of the filter layer (1,2,3 and 22) above the bases (14), soluble particles in the filling are dissolved by means of the fluid (10,23), and the fluid is withdrawn again under the filling, and in that the supply of fluid is controlled via the differential pressure in the filling, the addition of fluid being started when there is a prescribed maximum value and being interrupted again when there is a minimum differential pressure.

2. Method according to claim 1, characterised in that the supply of fluid is controlled with any excess so that the dry substance, separated in the filling, is in fact dissolved.

3. Method according to claim 1 or 2, characterised in that the supply of fluid is applied to each layer separately, when there are a plurality of layers which are situated above one another or behind one another and are traversed in sucession, and is withdrawn again therebeneath, the throughput of fluid decreasing when viewed with respect to the flow direction or respectively from layer to layer.

4. Apparatus for accomplishing the method according to one of claims 1 to 3, having one or more layers of the bulk material disposed behind one another in a housing - relative to their throughflow direction, characterised by the following features:
a) the housing (8) is divided into spatially disposed chambers one adjacent the other to correspond to the number of layers (1,2,3),
b) each chamber has two lateral walls (11,12) having a smaller height than the height of the housing, the first wall (12) sitting on the base (9), but the second (11) sitting on the upper wall (13) of the housing (8) when viewed with respect to the direction of flow (1) for connecting the chambers one behind the other,
c) sieve-like bases (14) are provided between two respective lateral walls (11,12) of a chamber, and the bulk material (2,3,4) lies on said bases,
d) a spacing is provided for the passage of the waste gas stream (1) between the lateral walls (11,12) of two adjacent chambers,
e) a number of spray nozzles (5,6,7) for the washing fluid (10) are mounted above the bulk material of each layer (2,3,4) and fed by means of pumps (19) via lines (18),
f) pressure measuring arrangements (20) are provided above each layer (2,3,4) between the lateral walls (11), which are secured at their upper end, and the external housing walls, in accordance with which arrangements the pumps (19) are controlled, the pressure measuring arrangements (20) determining the pressure difference above a respective layer (2,3,4) by means of the lines (21), which are connected between the walls (11) and the lateral walls of the housing (8),
g) the base (9) of the housing (8) is configured as the collecting tank for the washing fluid (10), which emerges from the layers (2,3,4).

5. Apparatus according to claim 4 for accomplishing a method according to one of claims 1 to 3, having one or more layers of the bulk material disposed behind one another, characterised by the additional features:
h) the individual layers (22) are disposed on the sieve-like bases (14) horizontally inclined in a housing,
i) collecting grooves (25), which extend parallel to the bases (22), are situated at a spacing therebeneath,
j) a number of spray nozzles (24) for the washing fluid (23) are mounted above the bulk material of each layer (22) and fed by means of a pump (19),
k) pressure measuring arrangements (20) are provided above each layer (22), in accordance with which arrangements the pump (19) is controlled, the pressure measuring arrangements (20) determining the pressure difference above a respective layer (22) by means of the lines (21), which are connected between the layers (22).

## Revendications

1. Procédé d'épuration de filtres à couches entassées chargés de particules solubles, constitués d'une unique ou de plusieurs couches de médias filtrants entassés sur des fonds à tamis, traversées du haut en bas par un courant de gaz résiduaire,
caractérisé en ce qu'un liquide de lavage (10, 23) est dispersé du haut en bas sur le tassement de la couche filtrante (1,2,3 et 22) placé sur les fonds (14), en direction du courant de gaz résiduaire (1, 26), que des particules solubles sont dissolus dans le tassement moyennant le liquide (10, 23) et que ce dernier est retiré sous le tassement, et que l'alimentation en liquide est contrôlée par l'action de la pression différentielle dans le tassement, avec l'approvisionnement en liquide branché à une valeur maximale définie atteinte et débranché à un minimum de pression différentielle.

2. Procédé selon la revendication 1 caractérisé en ce que l'alimentation en liquide est contrôlée sans produire d'excès de sorte que la substance sèche déposée dans le tassement est justement dissolue.

3. Procédé selon la revendication 1 ou 2 caractérisé en ce que l'apport du liquide est séparé pour chaque couche en cas d'un passage successif de plusieurs couches superposées respectivement placées l'une après l'autre, et retiré sous la couche, avec le débit de liquide décroissant en direction d'écoulement respectivement d'une couche à l'autre.

4. Dispositif pour exécuter le procédé selon une des revendications 1 jusqu'à 3 avec une ou plusieurs - par rapport à la direction d'écoulement - couches du tassement rangées dans une boîte, caractérisé en ce que
a) la boîte (8) est divisée, conformément au nombre des couches (1, 2, 3), en chambres placées l'une à côté de l'autre;
b) chaque chambre possède deux parois latérales (11, 12) d'une hauteur inférieure à celle de la boîte, avec, vu en direction d'écoulement (1), la première paroi (12) disposée sur le fond (9), la seconde (11) sur la paroi supérieure (13) de la boîte (8) pour montage en série des chambres;
c) entre deux parois latérales (11, 12) d'une chambre se trouvent des fonds à tamis (14) avec les tassements (2, 3, 4) déposés sur ces fonds;
d) les parois latérales (11, 12) de deux chambres voisines écartées pour permettre la pénétration par le courant de gaz résiduaire (11);
e) au dessus du matériau entassé de chaque couche (2, 3, 4) des tuyères-diffuseurs (5, 6, 7) distribuant le liquide de lavage (10) sont alignés qui, moyennant des pompes (19), sont alimentés par des conduits (18);
f) entre les parois latérales (11) fixées en haut et les parois extérieures des boîtes des dispositifs de mesure de pression (20) à travers chaque couche (2, 3, 4) sont installés selon l'indication desquels les pompes (19) sont commandées, avec les dispositifs de mesure de pression (20) enregistrant la différence de pression à travers une couche (2, 3, 4) moyennant les lignes (21) reliant les parois (11) avec les parois latérales de la boîte (8);
g) le fond (9) de la boîte (8) est conçu comme reservoir-collecteur du liquide de lavage (10) sortant des couches (2, 3,4).

5. Dispositif selon la revendication 4 pour exécuter un procédé conformément aux revendications 1 jusqu'à 3 avec une ou plusieurs couches ayant les caractéristiques supplémentaires suivants:
h) Les différentes couches (22) sont inclinées horizontalement sur les fonds à tamis (14).
i) A une distance des fonds (22) des rainures de réception (25) sont disposées en parallèle.
j) Au-dessus du tassement de chaque couche (22) des tuyères-diffuseurs (24) distribuant le liquide de lavage (23) sont alignées qui sont alimentés par une pompe (19).
k) Il existe des dispositifs de mesure de pression (20) à travers chaque couche (22) selon l'indication desquels la pompe (19) est commandée, avec les dispositifs de mesure de pression (20) enregistrant la différence de pression à travers une couche (22) moyennant les lignes reliant les couches (22).
